# FASCICULE DE BREVET EUROPEEN

(11) **EP 2 822 117 B1**
(45) Date de publication et mention de la délivrance du brevet: **06.01.2016**
(21) Numéro de dépôt: 14168786.3
(22) Date de dépôt: 19.05.2014
(51) Int. Cl.: H02B 1/46, H02J 13/00

(54) **Architecture pour interface de télécommande d'interrupteur**
Architektur für Fernbedienungsschnittstelle eines Trennschalters
Architecture for substation control unit

(30) Priorité: 05.07.2013 FR 1356645
(43) Date de publication de la demande: 07.01.2015
(73) Titulaire: Schneider Electric Industries SAS, 92500 Rueil-Malmaison (FR)
(72) Inventeur: Caous, Philippe, 38050 Grenoble Cedex 09 (FR); Bordonado, Franck, 38050 GRENOBLE Cedex 09 (FR); Pollo, Stéphane, 38050 Grenoble Cedex 09 (FR)
(74) Mandataire: Péru, Laurence

(56) Documents cités:
- EP-A1- 2 282 384
- EP-A2- 2 110 924
- "ITI / PASA 2012-4", , 6 mai 2013 (2013-05-06), XP055100390, Extrait de l'Internet: URL:http://www.ensto.com/download/23624_it i2012-4.pdf [extrait le 2014-02-05]
- Anonymous: "Coffrets ITI - Interface de Télécommande d'Interrupteur - Groupe Cahors", , 1 janvier 2012 (2012-01-01), XP055100393, Extrait de l'Internet: URL:http://www.groupe-cahors.com/marche-fr ance/electricite-moyenne-tension/materiels -de-gestion-de-reseau/postes-clients-62/ar ticle/coffrets-iti-interface-de?lang=en [extrait le 2014-02-05]

## Description

### DOMAINE TECHNIQUE

L'invention concerne l'architecture régissant l'agencement des différents composants d'une enveloppe d'un coffret électrique pour une interface de télécommande d'interrupteurs.

### ETAT DE LA TECHNIQUE

Les réseaux électriques sont généralement architecturés en plusieurs niveaux, avec un premier réseau de transport et de répartition très haute et haute tensions depuis les centrales de production sur de grandes distances. Après transformation, un réseau de distribution moyenne tension HTA ou MT lui succède pour des transports à plus petite échelle, vers des clients de type industriels ou vers des réseaux basse tension BT qui alimentent des clients de faible demande énergétique.

Au niveau du réseau de distribution usuellement entre 1 et 35 kV, et plus précisément 15 ou 20 kV en France, il est usuel que les appareillages HTA puissent être télécommandés à partir de postes distants. Ainsi, Electricité de France (EdF) utilise des interfaces de télécommande d'interrupteurs 400 A, ou ITI, pour commander jusque huit interrupteurs en utilisant le réseau radio analogique ou numérique par GPRS (pour *« General Packet Radio Service* »), le réseau téléphonique commuté RTC, une liaison téléphonique dédiée (ou liaison spécialisée LS), ou autres types de réseaux informatiques.

Un ITI, alimenté directement sur le réseau alternatif BT, permet donc la télécommunication avec le poste de conduite de réseau, la manoeuvre des commandes électriques des interrupteurs, la détection des défauts HTA, l'ouverture automatique d'un interrupteur sur détection du départ en défaut, la permutation automatique des sources d'alimentation, l'enregistrement des manoeuvres et la signalisation des événements datés. De plus, l'ITI doit assurer ces fonctions dites principales en cas de perte de la source alternative d'alimentation ; à cette fin, il comprend une source autonome d'alimentation qui vient suppléer la source usuelle alternative extérieure.

Des cahiers des charges régissent les éléments constitutifs des ITI. Ainsi par exemple leurs mises à la terre sont-elles précisées et les capteurs ont-ils des spécifications particulières. Notamment, les pénétrations de câbles doivent être munies de presse-étoupe, et les câbles de contrôle/commande sont raccordés à l'aide de connecteurs débrochables détrompés : le coffret comporte autant d'embases femelles de connecteur C10 type Han10A (référence Harting) que de voies de télécommande, munies de dispositifs de condamnation, classiquement sous forme d'un bandeau.

Les dimensions externes maximales des coffrets ITI sont imposées, selon le nombre de voies commandées, sachant qu'il est en outre requis que les coffrets puissent loger un poste radio ou un modem serveur IP (« *Internet Protocol* ») de dimensions maximales 70 x 210 x 305 mm³. L'encombrement dans les postes où sont placés les ITI peut impliquer la mise en place d'un coffret dit horizontal ou vertical, selon la taille relative de sa base par rapport à sa hauteur ; des distributeurs préféreraient utiliser le même coffret pour ces deux orientations, ceci afin de pouvoir retarder le choix et organiser leurs commandes et stocks.

Les différentes exigences normatives (voir norme HN 64-S-44 de mars 2012 notamment) laissent quelque liberté dans l'agencement du coffret, mais une configuration optimale reste à trouver, afin de satisfaire la compacité, la modularité complète, avec utilisation tant en horizontal qu'en vertical, et le cloisonnement des architectures matérielle et logicielle respectant les contraintes d'isolement, tout en facilitant les opérations de maintenance.

Le document EP2110924 décrit un système et une méthode pour gérer l'alimentation d'une unité de déclenchement d'un disjoncteur.

### EXPOSE DE L'INVENTION

A cette fin, l'invention se rapporte à un appareil électrique de surveillance et commande logé dans une enveloppe réalisée de préférence à partir de tôles pliées. L'enveloppe de l'appareil est un parallélépipède rectangle délimité par deux parois latérales opposées, une paroi de base opposée à une paroi supérieure, et une paroi de fond opposée à une porte, ladite porte étant montée de façon pivotante autour d'un axe de plus grande dimension du parallélépipède et solidarisée à une paroi latérale. Trois compartiments peuvent être délimités au sein de l'enveloppe dans l'appareil électrique, notamment un compartiment d'extrémité de logement d'une radio ou autre moyen de communication, un compartiment intermédiaire pour les fonctions électriques et électroniques, et un compartiment d'extrémité de logement d'une batterie. De préférence, la porte comprend une ouverture munie de moyens d'obstruction transparents qui permettent de visualiser au moins en partie le compartiment intermédiaire de l'enveloppe ; avantageusement, les moyens d'obstruction peuvent coulisser le long de la porte pour donner accès audit compartiment.

L'enveloppe de l'appareil est couplée à un bandeau comprenant des supports de connexion, monté de façon amovible sur sa paroi de base. Le bandeau est avantageusement formé par une plaque munie d'évidements sur au moins un desquels est monté un support de connexion, les autres étant de préférence obstrués par des masques. La plaque du bandeau est montée parallèlement à la paroi de base de l'enveloppe, notamment elle obstrue un trou dans ladite paroi ; pour un maintien du bandeau, la plaque est sensiblement des mêmes formes et dimensions que le trou, à l'exception d'une protubérance, notamment sous forme d'un pliage sur un côté de la plaque et parallèle à elle, qui peut s'insérer dans le trou pour former un emboîtement ; le maintien est complété par la présence d'au moins deux crochets sur la plaque qui viennent s'enclencher sur des parties complémentaires autour du trou de la paroi de base. La solidarisation est avantageusement complétée par un vissage.

L'appareil comprend, dans le compartiment de la batterie, un système de maintien de ladite batterie, de préférence sous forme d'une plaque support parallèle à la paroi de base et légèrement écartée. L'autre compartiment d'extrémité est délimité par une plaque de séparation, avantageusement en tôle pliée, parallèle à la paroi supérieure ; de préférence, la plaque de séparation est montée dans deux rails associés aux parois latérales de l'enveloppe.

Dans le compartiment intermédiaire est logé un tiroir, dont la face inférieure délimite ledit compartiment. Le tiroir comprend cinq faces orthogonales entre elles et parallèles aux parois de l'enveloppe, la sixième face étant libre de façon à pouvoir y accéder lorsque la porte de l'appareil est ouverte. Le tiroir est monté coulissant par l'intermédiaire de glissières localisées sur ses flancs latéraux, lesdites glissières étant entre la plaque de séparation et la face de fond du tiroir, c'est-à-dire que le tiroir est « suspendu » par les glissières. Les glissières, de préférence des pliages des faces, coulissent dans des moyens de guidage, avantageusement des rails montés sur les parois latérales, notamment au niveau de la plaque de séparation, voire couplées aux rails de montage de ladite plaque. Le tiroir est maintenu en position par l'intermédiaire de moyens adaptés sur les flancs, opposés aux glissières, notamment des moyens de type crochet qui peuvent s'encliqueter sur des protubérances des parois de l'enveloppe, notamment avec verrouillage amovible.

L'appareil comprend un système électronique de surveillance et commande localisé dans le tiroir comprenant au moins une carte électronique d'alimentation, une unité centrale d'acquisition et de traitement de données composée d'au moins une carte électronique, une interface homme-machine et un bloc de communication composé d'au moins une carte électronique ; de préférence, la carte d'alimentation est parallèle à un flanc latéral du tiroir alors muni d'une découpe pour son refroidissement. La face de fond du tiroir est de préférence formée par une carte électronique, éventuellement protégée par un plastron, formant fond de panier auquel se raccordent les autres cartes du système électronique de surveillance et commande.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
Les figures 1A et 1B montrent en positions ouverte et fermée la configuration générale d'un coffret pour un ITI selon un mode de réalisation préféré.
Les figures 2A et 2B illustrent un mode de réalisation préféré de la fixation du coffret.
La figure 3 représente les éléments constituant une enveloppe de coffret pour un mode de réalisation préféré de l'invention.
Les figures 4A et 4B illustrent l'architecture système et sa mise en place dans un appareil selon un mode de réalisation préféré de l'invention.
Les figures 5A et 5B montrent un rack pour éléments électroniques et sa mise en place dans un coffret selon un mode de réalisation préféré de l'invention.
Les figures 6A et 6B représentent un bandeau de connexion et sa mise en place pour un appareil selon un mode de réalisation préféré de l'invention.

### DESCRIPTION DETAILLEE D'UN MODE DE REALISATION PREFERE

Par simplification de la description, les différents éléments seront décrits en relation avec une position d'utilisation du coffret, monté dans un poste sur une paroi verticale, en configuration considérée comme usuelle, à savoir la position verticale du coffret utilisée dans 85 % des cas en pratique. Il est cependant entendu que les termes de position tels que « horizontal », « latéral », « fond » ne sont nullement restrictifs quant à l'objet de l'invention. Par ailleurs, les termes géométriques, tels que « orthogonal »,... doivent se comprendre dans leur acceptation mécanique, c'est-à-dire tolérant un écart par rapport à la définition mathématique stricte : par exemple, un « rectangle » peut, selon l'invention, être bombé et avoir des angles émoussés différant légèrement de 90°.

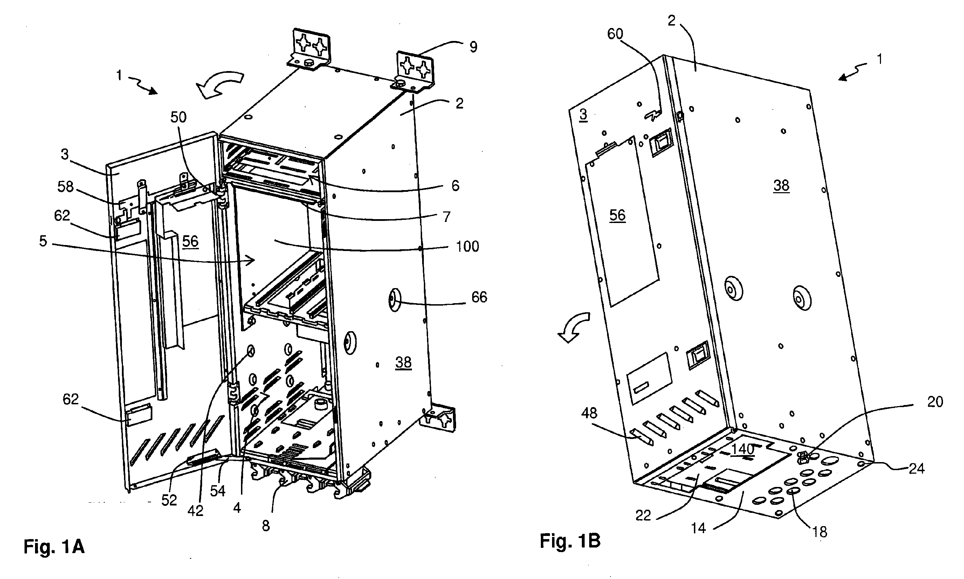

Tel qu'illustré en figures 1, le coffret 1 comprend une enveloppe parallélépipédique rectangle 2, fermée sur un côté opposé à la face de fixation sur une paroi par une porte 3. Selon l'invention, l'enveloppe 2 loge trois compartiments distincts : un compartiment 4 pour la batterie, un compartiment 5 réservé à l'électronique et un compartiment 6 réservé à la radio ou l'interface de communication LS/RTC/GPRS. La batterie est logée dans un coin en bas de l'enveloppe 2 de sorte que quelle que soit l'orientation horizontale ou verticale du coffret 1, une bonne dissipation thermique de la batterie est assurée.

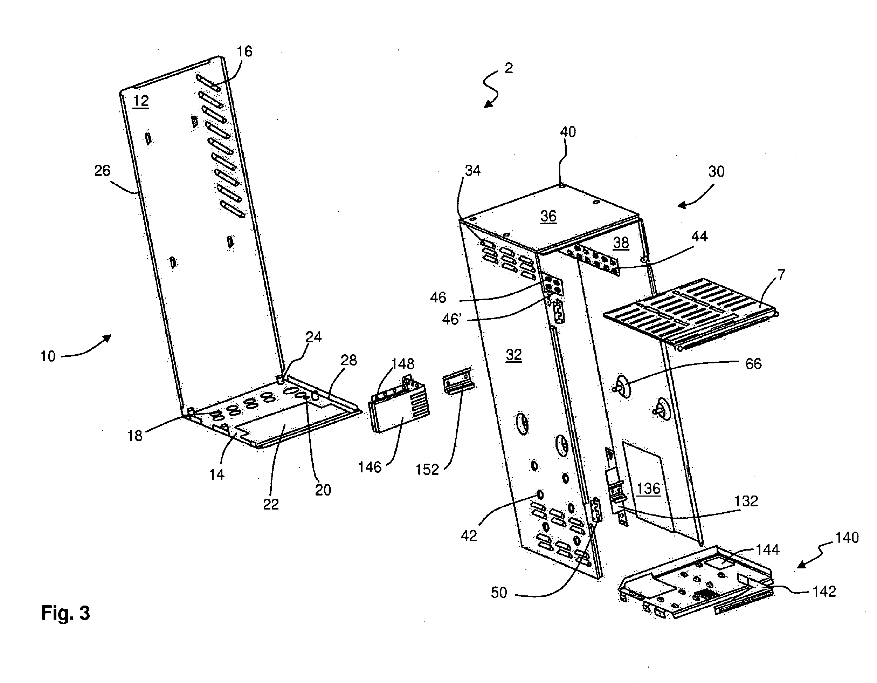

La radio est de préférence logée à l'opposé de la batterie, c'est-à-dire en haut de coffret 1, et séparée physiquement du reste des compartiments par une plaque de séparation 7, de préférence métallique et réalisée par pliage, qui est avantageusement solidarisée via un glissement dans des guides latéraux et vissée sur l'enveloppe 2. De préférence (voir aussi figure 3), la plaque de séparation 7, support à la radio et/ou autre moyens de communication, comporte en face avant un pliage horizontal servant de tirette et des découpes longitudinales et transversales qui permettent de fixer la radio et/ou des câbles selon plusieurs dimensions, et qui permet aussi une meilleure circulation d'air, tout en allégeant la matière.

Enfin, le coffret 1 comprend des moyens de raccordement 8, localisés en dessous de l'enveloppe 2 fermée par la porte 3, pour de la connectique vers les capteurs de tension et de courant, vers l'alimentation et vers la communication, ainsi que vers des moyens de contrôle/commande d'interrupteurs.

Le coffret 1 illustré est en position verticale et selon l'invention, il peut être « couché » par pivotement à 90° pour un placement horizontal. Il est solidarisé à une paroi verticale de poste par quatre dispositifs de fixation 9 permettant d'assurer un espace libre, notamment de 20 mm, entre la face arrière et la paroi, selon les prescriptions et pour éviter tout phénomène de condensation. Avantageusement, afin de satisfaire toutes les positions et tous les entraxes utilisés par EdF, la fixation de l'ITI utilise des *« Dispositif et procédé permettant la fixation d'un coffret sur un support selon deux orientations alternatives* » 9 tels que définis dans la demande de brevet FR 13 55207 déposée le 6 juin 2013, même si tout autre système d'attache est possible.

En particulier, le dispositif préféré 900 pour la fixation d'un coffret 1 sur une paroi selon deux orientations alternatives distinctes comprend, sur deux parois adjacentes et orthogonales l'une à l'autre ce qui permet une utilisation indifféremment aux quatre angles d'un coffret, un premier groupe d'orifices destinés à la fixation du dispositif sur le coffret, ainsi qu'un deuxième groupe d'orifices destinés à la fixation du dispositif sur la paroi. Chacun des groupes d'orifices comprend au moins deux orifices présentant des axes centraux respectifs, les axes des orifices de chaque groupe étant symétriques l'un de l'autre par rapport à un premier plan de symétrie. Un premier orifice du deuxième groupe comporte une première et une deuxième encoches sensiblement centrées par rapport à un deuxième plan parallèle audit premier plan, ainsi qu'une troisième et une quatrième encoches qui sont symétriques l'une de l'autre par rapport audit axe central dudit premier orifice et qui sont sensiblement centrées par rapport à un troisième plan orthogonal audit premier plan ; le deuxième orifice dudit deuxième groupe comporte une première et une deuxième encoches sensiblement centrées par rapport à un quatrième plan parallèle audit premier plan, ainsi qu'une troisième et une quatrième encoches qui sont symétriques l'une de l'autre par rapport audit axe central dudit deuxième orifice et qui sont sensiblement centrées par rapport audit troisième plan orthogonal audit premier plan. Cette configuration permet d'offrir au moins deux valeurs d'entre-axe différentes, en fonction de l'orientation du dispositif et du choix d'un orifice et d'une encoche utilisés respectivement pour la fixation sur un coffret et sur un support. De préférence, les axes centraux respectifs des orifices du deuxième groupe d'orifices présentent un écartement mutuel strictement supérieur à l'écartement mutuel entre les axes centraux respectifs des orifices du premier groupe d'orifices, afin d'accroître la place disponible pour former les encoches précitées et l'écart entre les valeurs d'entre-axe offertes par le dispositif.

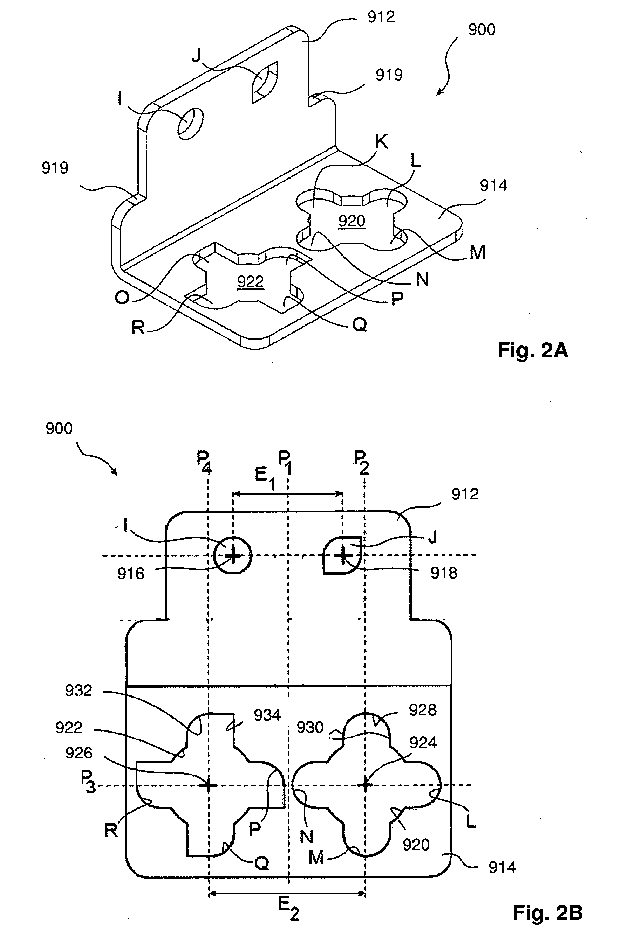

En particulier, tel qu'illustré en figures 2, le dispositif 900 préféré est formé par une équerre à deux faces en métal plié, et comporte ainsi une première paroi 912 destinée à être fixée sur le coffret 1, et une deuxième paroi 914 destinée à être fixée sur un support tel qu'un mur ou un rail. La première paroi comporte deux orifices I et J formant un premier groupe d'orifices d'axes centraux respectifs 916, 918 orthogonaux à la première paroi 912. Les deux orifices I et J présentent de préférence des formes géométriques distinctes l'une de l'autre à des fins de détrompage. La première paroi 912 comporte de préférence deux régions de largeurs respectives différentes raccordées l'une à l'autre par des épaulements latéraux 919. La deuxième paroi 914 comporte deux orifices ou évidements 920, 922 formant un deuxième groupe d'orifices et présentant des axes centraux respectifs 924 et 926 symétriques l'un de l'autre par rapport à un premier plan P1 défini comme plan de symétrie des axes centraux respectifs 916, 918 des orifices I, J du premier groupe d'orifices. Les axes centraux 924, 926 s'étendent orthogonalement à la deuxième paroi 914.

L'écartement E2 entre les axes centraux 924, 926 des deuxièmes orifices 920, 922 est avantageusement supérieur à l'écartement E1 entre les axes centraux 916, 918 des premiers orifices I et J. Chacun des orifices 920, 922 du deuxième groupe d'orifices présente avantageusement la forme d'un cercle pourvu de quatre encoches régulièrement réparties autour de son axe central 924, 926.

Les encoches du premier orifice 920 du deuxième groupe d'orifices se répartissent en une première encoche K et une deuxième encoche M sensiblement centrées par rapport à un deuxième plan P2 parallèle au premier plan P1 et incluant l'axe central 924 de l'orifice 920, et en une troisième encoche L et une quatrième encoche N qui sont symétriques l'une de l'autre par rapport à l'axe central 924 de l'orifice 920 et qui sont sensiblement centrées par rapport à un troisième plan P3 orthogonal au premier plan P1 et incluant l'axe central 924 de l'orifice 920. Les encoches du deuxième orifice 922 du deuxième groupe d'orifices se répartissent en une première encoche O et une deuxième encoche Q sensiblement centrées par rapport à un quatrième plan P4 parallèle au premier plan P1 et incluant l'axe central 926 de l'orifice 922, et en une troisième encoche P et une quatrième encoche R qui sont symétriques l'une de l'autre par rapport à l'axe central 926 de l'orifice 922 et qui sont sensiblement centrées par rapport au troisième plan P3 qui inclut également l'axe central 926 de l'orifice 922.

Chacun des orifices 920, 922 du deuxième groupe d'orifices présente ainsi globalement une forme correspondant à la superposition de quatre orifices à géométrie dite « en entrée de clé » tournés à 90 degrés les uns des autres. De ce fait, il est aisé d'insérer un élément de fixation tel qu'une vis au travers d'une portion centrale circulaire de l'un quelconque des orifices 920, 922, puis de translater l'élément de fixation vers le fond de l'une quelconque des encoches, pour une fixation à entraxes différents.

Les deux orifices 920, 922 du deuxième groupe d'orifices présentent des formes globales respectives distinctes l'une de l'autre à des fins de détrompage. En particulier, les encoches K, L, M, N du premier orifice 920 du deuxième groupe d'orifices présentent de préférence chacune une forme au moins partiellement semblable à une partie du premier orifice I du premier groupe d'orifices : chacune de ces encoches K, L, M, N présente par exemple un bord comprenant une portion de fond 928 semi-circulaire raccordée à deux portions latérales 930 rectilignes. De même, les encoches O, P, Q, R du deuxième orifice 922 du deuxième groupe d'orifices présentent de préférence chacune une forme au moins partiellement semblable à une partie du deuxième orifice J du premier groupe d'orifices : chacune de ces encoches O, P, Q, R présente par exemple un bord comprenant une première portion 932 en forme de moitié d'oeil ou de moitié d'amande raccordée à une seconde portion 934 rectiligne.

L'enveloppe 2 du coffret est réalisée à partir de tôles métalliques pliées, de préférence avec deux éléments formant les cinq faces du parallélépipède fermé par la porte 3 : voir figure 3. En particulier, un premier élément 10 en L forme la paroi de fond 12 et la base 14 de l'enveloppe 2. Sur la paroi de fond 12 sont présentes des ouïes 16 pour la ventilation du coffret 1, avantageusement inclinées à 45° pour satisfaire aux positions verticale et horizontale. La base 14 quant à elle est munie de plusieurs orifices 18, habituellement circulaires et qui seront associés à des presse-étoupes, pour le passage de câbles (alimentation des différentes voies, tension, entrée/sorties digitales, transmission...), ainsi qu'un orifice 20 dédié à la prise de terre, et une découpe 22, en T, destinée à accueillir des connecteurs de type Harting ; la base 14 peut aussi comprendre les inserts 24 pour les dispositifs de fixation amovibles 9 qui seront maintenus par vis et rondelle si ce mode de fixation est retenu. Sur leurs côtés, les branches 12, 14 du L comprennent des pliages 26, 28 destinés à la fixation du deuxième élément 30 de l'enveloppe 2.

Le deuxième élément 30 est quant à lui en forme de U. Une des parois latérales 32 seulement (à droite sur la figure) comprend des ouïes de ventilation 34, la paroi de dessus 36 et l'autre paroi latérale 38 (destinée à devenir paroi de dessus lors de la position horizontale du coffret 1) n'en comprenant pas pour des raisons d'étanchéité ; la paroi de dessus 36 peut aussi comprendre les inserts 40 pour les dispositifs de fixation amovibles 9, 900 si ce mode de fixation est retenu. La batterie étant de préférence placée contre la paroi latérale 32 munie d'ouïes 34, cette dernière est de préférence dotée d'emboutis circulaires 42 par exemple six, pour espacer la batterie de l'enveloppe 2. Les deux parois latérales 32, 38 sont dotées de moyens de fixation de la plaque de séparation 7 du compartiment radio 6 ; de préférence, il s'agit d'un rail 44, avantageusement sous forme de plaque métallique riveté sur les parois 32, 38, comportant au moins une double rangée de crevées 46 supportant et guidant la plaque de séparation 7 ; un pli dans les parois 32, 38 peut permettre un vissage aisé de la plaque de séparation 7 une fois positionnée dans le rail 44. Avantageusement, le rail 44 comprend une deuxième double rangée de crevées 46' servant de guidage à un rack coulissant dans le compartiment électronique 5.

Les deux éléments 10, 30 sont solidarisés entre eux par rivetage. L'espace est fermé par la porte 3, elle aussi réalisée par pliage et découpe, et assemblage des différents éléments constitutifs. De préférence, la porte 3 peut garantir, tant en horizontal qu'en vertical, les trois niveaux d'accès requis par certaines normes, le coffret étant par exemple conforme à celui décrit dans la demande de brevet FR 13 55228 déposée le 6 juin 2013 et intitulée « *Coffret notamment pour équipement électrique utilisable horizontalement et verticalement* ». Notamment, la porte 3, comportant des ouïes 48 inclinées à 45° pour la ventilation du coffret 1 en positions verticale et horizontale, est fixée à l'enveloppe 2, sur la paroi latérale 32 supportant la batterie le long du plus grand axe, par des charnières 50 rivetées, et retenue dans les deux orientations d'ouverture à 90° grâce à un système d'équerre 52 et de béquille 54 ; la porte 3 comprend notamment une ouverture munie de moyens d'obstruction transparents 56 permettant d'accéder visuellement aux informations nécessaires du compartiment électronique 5 munis d'un loquet 58 à trois positions grâce à une découpe spécifique en Z pour la course de son goujon 60.

La porte 3 comprend également une anse pour une condamnation par cadenas et un oeillet permettant la pose d'un scellé ; la paroi latérale 38 opposée aux charnières 50 comprend, au niveau du soyage, deux découpes permettent la fermeture des loquets 62 de la porte 3, et une troisième découpe permet le passage du loquet 58 des moyens d'obstructions transparents 56 ; en bas du même soyage, se trouve un ergot présentant un oeillet et permettant de sceller la porte 3 du coffret 1 par plombage. Ainsi, le niveau « 0 » dans lequel l'utilisateur a visuellement accès aux informations requises via les moyens transparents est défini par la porte 3 fermée, cadenassée et scellée ; en enlevant le cadenas, et en décalant le loquet 58 des moyens d'obstruction 56 vers la gauche, le niveau « 1 » est activé et l'utilisateur peut accéder à l'interface homme-machine du compartiment électronique 5 par ouverture desdits moyens 56 ; en enlevant le scellé, l'utilisateur peut accéder au niveau « 2 » en ouvrant totalement la porte 3 via les deux loquets 62 à fermeture par poussée, pour des opérations de type maintenance.

Selon l'invention, le coffret 1 comprend un seul compartiment 5 dédié à contenir tous les éléments électroniques de traitement de signaux et communication de l'ITI, les moyens de communication vers l'unité centrale de télé-conduite, comme la radio ou l'interface de communication 64, étant eux-mêmes localisés dans le compartiment haut 6 et éventuellement fixés à la plaque de support 7. En particulier, les différentes fonctions sont regroupées dans un agencement optimisé.

En particulier, les moyens de communication 64 sont reliés via un bloc d'interface de communication 70 à l'électronique du coffret 1 pour réaliser les échanges d'information nécessaires. De préférence, le bloc d'interface de communication 70 comprend une carte 72 de gestion de la communication distante (avec la radio par exemple) et une carte 74 coeur de gestion des communications internes entre les éléments électronique du coffret 1 et des protocoles natifs, ainsi que de l'interface avec un configurateur HTML, qui est avantageusement embarqué dans la carte coeur 74 via notamment un port USB.

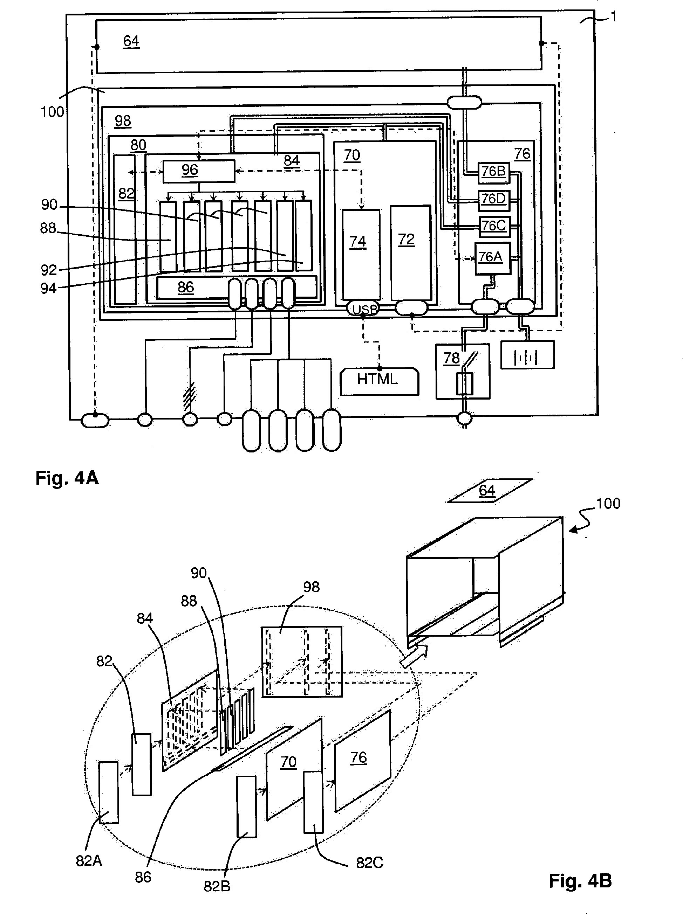

Dans le compartiment 5 contenant les éléments électroniques est également localisé le bloc d'alimentation de puissance 76 commun aux éléments électriques et électroniques du coffret 1. Ce bloc 76 est couplé au secteur, notamment via un dispositif de protection et sectionnement 78, ainsi qu'à la batterie, par exemple 12 V, du compartiment bas 4. Dans un mode de réalisation préféré illustré en figure 4A, le bloc d'alimentation 76 comprend une carte avec des fonctions : 76A de chargeur de la batterie à partir du secteur, 76B d'alimentation 12 V destiné à la radio, 76C d'alimentation 12 V des blocs fonctionnels du coffret, et 76D de commande 48 V des différentes voies pour manoeuvrer notamment les interrupteurs surveillés par l'ITI selon l'invention.

Parmi les éléments électroniques de l'ITI, on peut enfin trouver le bloc de contrôle et commande 80, qui comprend une platine 82 locale d'interface homme machine IHM permettant les interactions système-opérateur par l'intermédiaire de boutons et de voyants" et une unité centrale 84, coeur fonctionnel de l'ITI. Le lexan de la platine IHM 82 est fonction du sens d'orientation et peut être décomposé en une pluralité d'éléments 82A, 82B, 82C associés aux différentes fonctions de l'unité centrale 84.

L'unité centrale 84 comprend notamment une carte de liaison 86 permettant de récupérer les mesures de tensions, courants, entrées/sorties et d'échanger les informations de contrôle/commande avec les interrupteurs ; la carte de liaison 86 est de préférence connectée perpendiculairement à l'unité centrale 84 pour faciliter la connectique des éléments précités, en évitant un rayon de courbure des câbles trop important ce qui permet un gain de place. L'unité centrale comprend également une carte 88 de mesure de tension pour l'acquisition des tensions triphasées MT se connectant parallèlement à plat, et au moins une carte 90 de mesure de courant pour l'acquisition des courants triphasés, également connectée parallèlement à plat ; le nombre de cartes 90 de mesure du courant dépend du nombre de voies gérées par l'ITI, mais chacune embarque la détection de défauts pour remonter le type de défaut vu à l'unité centrale 84. L'unité centrale 84 intègre enfin un module fonctionnel 92 pour l'interface I/O, qui assure la gestion des informations des entrées /sorties, un module fonctionnel 94 pour la commande des voies, afin d'assurer le contrôle/commande des interrupteurs, et un module fonctionnel 96 en charge d'assurer simultanément les fonctions principales d'un ITI (hors communication) à savoir :
- la manoeuvre des commandes électriques des interrupteurs HTA ;
- la gestion de la détection des défauts HTA, directionnelle ou ampèremétrique ;
- l'ouverture automatique de l'interrupteur HTA sur détection du départ HTA en défaut, grâce à une fonction « Automatisme Décentralisé Alarmé » ;
- la permutation automatique des sources d'alimentation ;
- le maintien des fonctions de l'ITI en cas de perte de la source alternative d'alimentation et la sauvegarde de la source autonome sur émission permanente de la radio ;
- l'enregistrement des manoeuvres et signalisations des événements datés et le comptage de la détection de défaut HTA, du contexte et de la nature des incidents externes et internes, etc. ;
- l'accès aux fonctions via une interface homme-machine.

Le mode de réalisation présente une fonctionnalisation des cartes électroniques qui peut bien entendu être modifiée.

Pour assurer les interfaces entre les trois blocs fonctionnels électroniques 70, 76, 80, selon l'invention, une carte 98 est utilisée ; elle est mise en place en fond de panier, de façon à avoir un accès direct aux différentes cartes des blocs en cas de besoin. De plus, afin de faciliter la maintenance, les cartes électroniques associées aux différents blocs 70, 76, 80 sont mises en place dans un tiroir 100 qu'il est aisé d'extraire du coffret 1, de façon à pouvoir remplacer une ou plusieurs cartes montées sur le « fond de panier » 98.

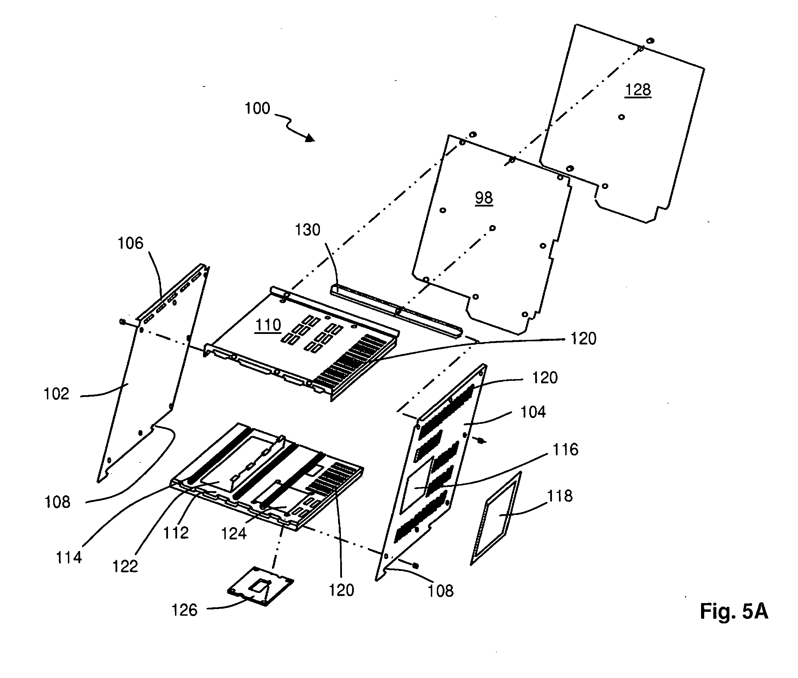

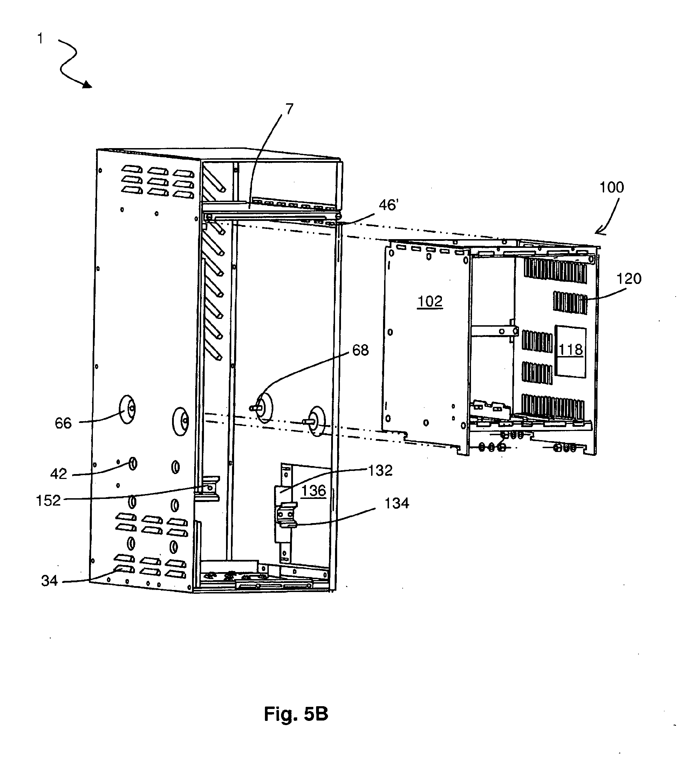

Outre sa face de fond formée par la carte 98, le rack 100 lui-même est composé de quatre faces en tôle pliée et peut coulisser le long des parois latérales 32, 38 du coffret 1, les dimensions du rack 100 étant déterminées de façon à garantir, sur toutes ses faces un espacement par rapport aux parois du coffret 1, suffisant pour permettre une bonne évacuation thermique. De préférence, le rack 100 est guidé par le haut, notamment via les rails 44 de support de la plaque de séparation 7 par la double rangée de crevées 46' parallèle. A cette fin, tel qu'illustré en figure 5A, les flancs 102, 104 du rack 100 comprennent sur leur partie haute des pliages 106 destinés à servir de glissière entre les crevées 46' pour guidage horizontal et positionnement par le haut du rack 100 dans le coffret 1. Pour maintenir le rack 100 en place, un dispositif d'encliquetage est prévu en bas de rack 100, coopérant avec des aménagements sur les parois 32, 38 de l'enveloppe 2. Les deux parois 32, 38 comprennent ainsi chacune deux défonces 66 circulaires comportant des goujons 68 sur lesquels viendra coulisser puis se verrouiller le rack amovible 100 ; les flancs 102, 104 du rack 100 comprennent quant à eux en bas des butées en crochet 108 venant s'engager sur les goujons 68, avec possibilité de verrouillage, une fois le rack 100 suffisamment enfoncé dans le compartiment 5. De préférence, défonces 66 et crochets 108 sont décalés verticalement (les composants 66, 108 les plus proches de la porte 3 étant plus bas que les plus lointains) pour permettre un basculement léger à des fins de retrait du rack 100 sans forcer.

Les faces supérieure 110 et inférieure 112 du rack 100 comprennent quant à elles des guides 114 pour les cartes électroniques, notamment trois guides chacune. La carte d'alimentation 76 devant de préférence être associée à des moyens de refroidissement adaptés, elle est positionnée sur un des côtés du rack 100, à droite dans le mode illustré en figure 4B ; le flanc correspondant 102 du rack 100 possède ainsi une découpe 116 pour isoler les radiateurs de la carte alimentation 76 de la carcasse du rack 100 ; pour limiter l'accès, une protection adhésive 118 est rajoutée. Des aérations supplémentaires 120 sur ledit flanc 102 peuvent être prévues, ainsi que sur les faces supérieure et inférieure 112, 114.

De plus, afin de permettre les connexions, des découpes 122, 124 permettant le passage de connectiques sont prévues, notamment en face inférieure du rack, avec trois découpes pour l'accès aux connecteurs des cartes, dont une 124 à droite est destinée au passage de l'alimentation et de préférence complétée par une plaque isolante 126 additionnelle pour des contraintes d'isolement et de distance. Un plastron 130 peut doubler la carte de fond de panier 98 pour l'isoler de la paroi de fond 12 du coffret 1, et comprend alors lui aussi une découpe pour la connectique ; une poutre 130 peut être mise en place pour rigidifier latéralement le tiroir 100 suivant la flexibilité de sa face de fond 98, 128.

Dans le compartiment bas 4 est logée la batterie. De plus, le compartiment 4 comprend le dispositif de protection et sectionnement 78, notamment un fusible, de l'appareil requis. Le compartiment 4 comprend ainsi une équerre 132, réalisée par pliage, qui peut comporter des crevées pour glisser des colliers de maintien de câbles, portant un rail DIN 134 supportant le fusible, qui est rivetée sur la paroi 38 de l'enveloppe 2. La paroi 38 est de plus munie d'un plastron isolant 136 pour l'isolation électrique de ladite paroi 38.

De préférence, la batterie est maintenue selon les six degrés de liberté par sangle et butée, tel que décrit dans la demande de brevet EP 14 163 051.7 déposée le 1 avril 2014 et intitulée *« Fixation d'une batterie de taille variable dans un coffret électrique* ». Notamment, une plaque de support 140 de batterie est mise en place en bas de l'enveloppe 2, avec différents moyens de maintien en butée 142 et orifices de passage de câbles 144, et un dispositif de support arrière 146 est fixé sur deux parois, gauche et de fond, 32, 12 de l'enveloppe 2 par rivet ; cette équerre 146 réalisée par pliage permet également la fixation de câbles par mise en place de colliers de serrage dans plusieurs trous circulaires 148. Alternativement, l'équerre 146 peut être remplacée par un ados muni d'un orifice ouvert avec barreau coulissant, ledit barreau permettant un ajustement d'orifices de passage de sangle.

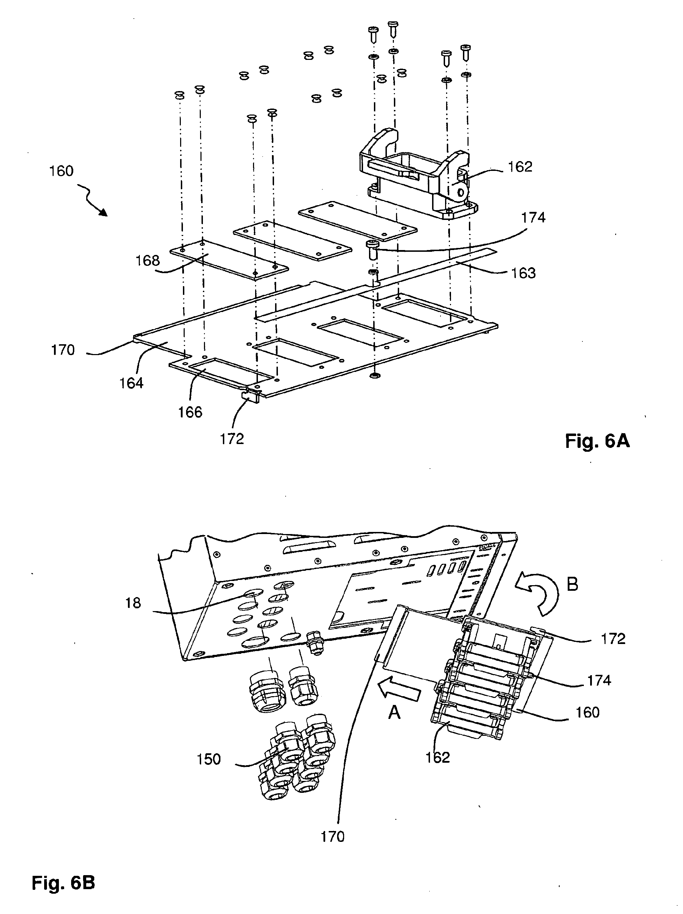

La plaque de support 140 est ainsi mise en place pour laisser libre l'accès aux orifices 18 de la paroi de base 14, associés classiquement à des presse-étoupes 150 illustrés en figure 6B, pour le passage des câbles de communication vers l'interface 64 et le compartiment haut 6, pour certains par l'intermédiaire éventuel d'un rail de raccordement de communication 152 fixé sur la face de fond 12 de l'enveloppe 2. Par ailleurs, d'autres câbles de raccordement vers le rack 100 (alimentation, signaux vers les cartes de mesure 88, 90,...) empruntent également cet espace libre à l'arrière de la batterie.

Les câbles de contrôle-commande, en provenance du rack 100 passent quant à eux préalablement derrière l'équerre 146 puis derrière et sous la plaque de support 140 ; leur extrémité munie d'un connecteur C10 type Han10A est, tel qu'usuel, mise en place dans une partie du système de raccordement 8 sous forme d'un bandeau de connexion 160, comprenant notamment des supports mécaniques 162 pour les connecteurs associé sous l'enveloppe pour former partie du coffret 1. Ces prises sont encombrantes, lourdes (de l'ordre de 180 g par élément sans compter le poids des câbles) et complexes en termes de connectique au vu des dix connexions nécessaires : leur installation est malaisée, tant sur le plan électrique que sur le plan mécanique, compte tenu des contraintes d'accessibilité et de masse.

Par ailleurs, dans le mode de réalisation préféré illustré, avec double configuration et maintien de la batterie par l'intermédiaire d'une équerre et d'une sangle perpendiculaire à la base du coffret 1, un passage et un ajustement de la sangle entre le support batterie 140 et la paroi de base 14 sont requis : il devient ainsi préconisé de pouvoir retirer, au moins partiellement, le bandeau 160, notamment pour les opérations d'assemblage en production, et les opérations de maintenance de la batterie sur le terrain. Au vu des câbles qui traversent le bandeau 160 et du poids de cette connectique, avantageusement, le bandeau 160 est agencé de façon à pouvoir être auto-maintenu, de façon à permettre un positionnement de la batterie sans nécessiter de dé-câbler les éléments de communication.

Selon le mode de réalisation préféré de l'invention, le bandeau 160 permet de gérer selon les variantes et options de montage de 1 à 4 voies identifiées par une étiquette 163 et comprend une plaque 164 munie de quatre orifices 166, les orifices non utilisés étant obstrués par des plaques de masquage 168, par exemple vissées, les orifices utilisés étant associés à des supports mécaniques de prise Harting femelle 162, solidarisés par exemple par vissage. Par ailleurs, pour éviter une augmentation du volume externe du coffret 1, et en outre de garder le même axe de passage de câble pour les câbles de contrôle-commande via les prises Harting et les câbles d'alimentation, de mesures, de communication et de gestion des entrées-sorties via les presse-étoupes 150, le bandeau 160 est mis en place avec sa plaque support 164 parallèle au fond de coffret 14, dans le trou 22 en T de la base 14 ; les orifices 144 dans la plaque de support de batterie 140 permettent de courber les câbles de façon appropriée.

Au vu de son poids, il a été choisi de réaliser un bandeau 160 auto-maintenu : la taille de la plaque support 164 est légèrement supérieure à celle du trou 22, avec une partie principale du support superposable à la forme du trou et, sur un côté excédentaire, un pliage 170 en forme de marche qui peut s'insérer entre la plaque support de batterie 140 et la face de fond 14 de l'enveloppe 2, de préférence (flèche A de la figure 6B) selon un angle aigu permettant une meilleure visualisation et une accessibilité accrue ; une fois inséré partiellement, le bandeau 160 est plaqué (flèche B) contre le fond du coffret, et deux plis 172 situés sur les bords de la partie principale de la plaque support 164 du bandeau 160, vers l'intérieur de l'enveloppe 2 et en forme de crochet se mettent en place sur des encoches correspondantes de la paroi de base 14. Le bandeau 160 est ainsi couplé de façon amovible à l'enveloppe 2. Afin de solidariser le bandeau 160, le maintien est complété par un vissage, de préférence par une seule vis imperdable 174.

Ainsi, le mode de réalisation présenté permet d'obtenir un coffret 1 de téléconduite ITI à trois niveaux d'accès, avec une batterie maintenue de façon à passer les tests vibratoires, pouvant être utilisé en position verticale et en position horizontale, dont les fonctions électroniques principales présentées dans l'état de la technique et électriques sont confinées et cloisonnées dans un rack amovible 100 pour des raisons d'isolement et en vue de faciliter la maintenance. Le rack 100 s'insère dans le coffret 1 par un mouvement unique de translation horizontale, et il est fixé par l'intermédiaire d'écrous sur des goujons, venant serrer les butées en crochet 108 dudit rack 100 ; la conception du rack 100 permet une évacuation thermique des composants électroniques sur l'ensemble de ses faces. L'architecture matérielle et logicielle du système de surveillance et commande est quant à elle définie par blocs fonctionnels (alimentation, communication, téléconduite...), de sorte à permettre un cloisonnement physique en respect des contraintes d'isolement, de protection du matériel contre les chocs mécaniques, tout en conservant une facilité pour les opérations de maintenance de l'appareil.

Par ailleurs, les raccordements électriques sont réalisés à travers un bandeau 160 qu'on peut retirer, ou simplement déplacer, et auto-maintenu, fixé par une unique vis imperdable 174, dont la mise en oeuvre est possible dans les deux orientations de coffret 1, ce qui permet d'autres opérations sur le coffret (comme la fixation de la batterie). De fait, il est possible de garder le bandeau 160 solidaire de l'enveloppe 2 de l'appareil pour des opérations d'assemblage, d'installation ou de maintenance ; par ailleurs, malgré le poids du système et les conditions d'accès, le montage du bandeau 160 est facilité et raccourci par la configuration autoportée. Le nombre de prises de connexion de communication 162 peut être adapté, et leur accès se fait dans le même axe que le passage de câbles dans les presse-étoupe 150, minimisant l'encombrement du coffret 1.

Bien que l'invention ait été décrite pour un coffret bi-position d'interface de télécommande d'interrupteur comprenant toutes les options d'une architecture optimisée, elle ne s'y limite pas et certains des éléments précédents peuvent être omis ou remplacés par d'autres solutions. Par ailleurs, certaines des solutions apportées dans le coffret selon l'invention peuvent être utilisées pour d'autres dispositifs, notamment pour tout coffret destiné à loger des interfaces homme-machine, notamment pour piloter des équipements de réseau de distribution d'électricité.

## Revendications

1. Appareil électrique, tel qu'un coffret d'interface de télécommande d'interrupteurs (ITI) haute tension, comprenant une enveloppe (2) parallélépipédique rectangle délimitée par deux parois latérales opposées (32, 38), une paroi de fond (12), deux parois de base (14) et supérieure (36) opposées, et une porte (3) couplée de façon pivotante à une paroi latérale (32) le long d'une arête de plus grande dimension du parallélépipède, ledit appareil comprenant, à l'intérieur de l'enveloppe (2) :
- une plaque de séparation (7) parallèle aux parois de base et supérieure (14, 36) ;
- des moyens de guidage (46'), parallèles à la plaque de séparation (7), sur les parois latérales (32, 38) ;
- un tiroir (100) formé par deux flancs latéraux (102, 104) parallèles aux parois latérales (32, 38) de l'enveloppe (2), deux faces supérieure et inférieure (110, 112) parallèles entre elles et à la plaque de séparation (7), la face supérieure (110) étant localisée entre la face inférieure (112) et la paroi de séparation (7), les flancs latéraux (102, 104) comprenant, au niveau de la face supérieure (110), des glissières (106) pouvant coulisser dans les moyens de guidage (46') et, au niveau de la face inférieure (112), des moyens de solidarisation amovible (108) avec les parois latérales (32, 38) de l'enveloppe (2) ;
de sorte que l'enveloppe (2) délimite trois compartiments (4, 5, 6) séparés par la plaque de séparation (7) et la face inférieure (112) du tiroir (100) ;
- un système électronique de surveillance et de commande comprenant au moins une carte d'alimentation (76), une unité centrale d'acquisition et de traitement de données (84) composée de cartes électroniques, une interface homme-machine (82) et un bloc de communication (70) composé de cartes électroniques, ledit système électronique de surveillance et de commande étant localisé dans le tiroir (100) ;
- un système de maintien (140) d'une batterie au niveau de la paroi de base (14).

2. Appareil selon la revendication 1 dans lequel le système électronique comprend une carte de fond de panier (98) formant cinquième face du tiroir (100) et parallèle à la paroi de fond de l'enveloppe (2), les autres cartes dudit système s'y raccordant.

3. Appareil selon l'une des revendications 1 ou 2 dans lequel la carte d'alimentation (76) du système de surveillance et de commande est parallèle à un flanc latéral (104) du tiroir (100), ledit flanc (104) comprenant une découpe (116) pour le refroidissement de la carte d'alimentation (76).

4. Appareil selon l'une des revendications 1 à 3 dans lequel la face inférieure (112) du tiroir (100) comprend des orifices de passage de câbles (122, 124).

5. Appareil selon l'une des revendications 1 à 4 dans les flancs latéraux (102, 104) et les faces supérieure et inférieure (110, 112) du tiroir (100) sont des tôles pliées, les glissières (106) sont formés par des plis de la tôle des parois (102, 104) et les moyens de solidarisation amovible (108) sont des découpes en crochet coopérant avec des protubérances (68) des parois latérales (32, 38) de l'enveloppe (2).

6. Appareil selon l'une des revendications 1 à 5 dans lequel la porte (3) comprend un orifice muni de moyens d'obstruction transparents (56) permettant de visualiser au moins en partie l'intérieur du tiroir (100).

7. Appareil selon la revendication 6 dans lequel les moyens d'obstruction transparents (56) sont montés coulissants le long de la porte (3), un loquet (58) permettant l'accès à l'intérieur du tiroir (100).

8. Appareil selon l'une des revendications 6 ou 7 dans lequel la porte (3) est munie de moyens de verrouillage agencés pour permettre trois degrés de sécurité, à savoir une enveloppe (2) fermée sans accès aux compartiments (4, 5, 6), un accès uniquement à une partie du tiroir (100) et un accès à l'ensemble des compartiments (4, 5, 6).

9. Appareil selon l'une des revendications 1 à 8 comprenant en outre un bandeau de connexion (160) muni de supports de connexion (162) qui peut être solidarisé de façon amovible à la paroi de base (14) de l'enveloppe (2).

10. Appareil selon la revendication 9 dans lequel le bandeau (160) comprend une plaque (164) munie d'évidements (166), un évidement au moins étant associé à un support de connexion (162), la plaque (164) étant montée parallèle à la paroi de base (14).

11. Appareil selon la revendication 10 dans lequel la paroi de base (14) comprend un trou (22), la plaque (164) comprend une partie principale de forme identique à celle du trou (22) complétée par un pliage (170) parallèle à la partie principale et pouvant s'insérer dans le trou (122), et par au moins deux crochets (172) permettant le maintien du bandeau (160) contre la paroi de base (14).

12. Appareil selon l'une des revendications 1 à 11 dans lequel le système de maintien de la batterie comprend une plaque support (140) parallèle à la paroi de base (14).

13. Appareil selon l'une des revendications 1 à 12 comprenant des rails (44) munis des moyens de guidage (46') du tiroir (100) et de moyens de guidage parallèles (46) pour la plaque de séparation (7).

14. Appareil selon l'une des revendications 1 à 13 dans lequel l'enveloppe (2) est formée par des tôles pliées.

## Patentansprüche

1. Elektrisches Gerät, wie ein Schaltkastengehäuse einer Fernsteuerungsschnittstelle für Hochspannungsschalter (ITI), das eine von zwei gegenüberliegenden Seitenwänden (32, 38), einer Rückwand (12), zwei gegenüberliegenden Basis- (14) und Deckwänden (36) begrenzte rechtwinklige parallelepipedische Hülle (2) und eine Tür (3) enthält, die entlang einer Kante größerer Abmessung des Parallelepipeds schwenkbar mit einer Seitenwand (32) gekoppelt ist, wobei das Gerät im Inneren der Hülle (2) enthält:
- eine Trennplatte (7) parallel zu den Basis- und Deckwänden (14, 36);
- Führungseinrichtungen (46') parallel zur Trennplatte (7) auf den Seitenwänden (32, 38);
- einen Einschub (100), der von zwei Seitenflanken (102, 104) parallel zu den Seitenwänden (32, 38) der Hülle (2), zwei Ober- und Unterseiten (110, 112) parallel zueinander und zur Trennplatte (7) geformt wird, wobei die Oberseite (110) sich zwischen der Unterseite (112) und der Trennwand (7) befindet, wobei die Seitenflanken (102, 104) im Bereich der Oberseite (110) Gleitschienen (106), die in den Führungseinrichtungen (46') gleiten können, und im Bereich der Unterseite (112) Einrichtungen zur lösbaren festen Verbindung (108) mit den Seitenwänden (32, 38) der Hülle (2) enthalten;
so dass die Hülle (2) drei Abteile (4, 5, 6) begrenzt, die durch die Trennplatte (7) und die Unterseite (112) des Einschubs (100) getrennt werden;
- ein elektronisches Überwachungs- und Steuersystem, das mindestens eine Versorgungskarte (76), eine aus Elektronikkarten bestehende zentrale Datenerfassungs- und verarbeitungseinheit (84), eine Mensch-Maschine-Schnittstelle (82) und einen aus Elektronikkarten bestehenden Kommunikationsteil (70) enthält, wobei das elektronische Überwachungs- und Steuersystem sich im Einschub (100) befindet;
- ein Haltesystem (140) einer Batterie im Bereich der Basiswand (14).

2. Gerät nach Anspruch 1, wobei das Elektroniksystem eine Rückwandplatinenkarte (98) enthält, die eine fünfte Seite des Einschubs (100) formt und zur Rückwand der Hülle (2) parallel ist, wobei die anderen Karten des Systems sich daran anschließen.

3. Gerät nach einem der Ansprüche 1 oder 2, wobei die Versorgungskarte (76) des Überwachungs- und Steuersystems parallel zu einer Seitenflanke (104) des Einschubs (100) ist, wobei die Flanke (104) einen Ausschnitt (116) zur Kühlung der Versorgungskarte (76) enthält.

4. Gerät nach einem der Ansprüche 1 bis 3, wobei die Unterseite (112) des Einschubs (100) Kabeldurchgangsöffnungen (122, 124) enthält.

5. Gerät nach einem der Ansprüche 1 bis 4, wobei die Seitenflanken (102, 104) und die Ober- und Unterseite (110, 112) des Einschubs (100) Falzbleche sind, die Gleitschienen (106) von Falzen des Blechs der Wände (102, 104) geformt werden, und die Einrichtungen zur lösbaren festen Verbindung (108) hakenförmige Ausschnitte sind, die mit Vorsprüngen (68) der Seitenwände (32, 38) der Hülle (2) zusammenwirken.

6. Gerät nach einem der Ansprüche 1 bis 5, wobei die Tür (3) eine mit transparenten Versperreinrichtungen (56) versehene Öffnung enthält, die es ermöglichen, das Innere des Einschubs (100) zumindest teilweise sichtbar zu machen.

7. Gerät nach Anspruch 6, wobei die transparenten Versperreinrichtungen (56) entlang der Tür (3) gleitend montiert sind, wobei eine Sperrklinke (58) den Zugang ins Innere des Einschubs (100) erlaubt.

8. Gerät nach einem der Ansprüche 6 oder 7, wobei die Tür (3) mit Verriegelungseinrichtungen versehen ist, die eingerichtet sind, um drei Sicherheitsgrade zu erlauben, d.h. eine Hülle (2) geschlossen ohne Zugang zu den Abteilen (4, 5, 6), ein Zugang nur zu einem Teil des Einschubs (100) und ein Zugang zur Gesamtheit der Abteile (4, 5, 6).

9. Gerät nach einem der Ansprüche 1 bis 8, das außerdem eine mit Verbindungsträgern (162) versehene Verbindungstafel (160) enthält, die lösbar fest mit der Basiswand (14) der Hülle (2) verbunden werden kann.

10. Gerät nach Anspruch 9, wobei die Tafel (160) eine mit Aussparungen (166) versehene Platte (164) enthält, wobei mindestens eine Aussparung einem Verbindungsträger (162) zugeordnet ist, wobei die Platte (164) parallel zur Basiswand (14) montiert ist.

11. Gerät nach Anspruch 10, wobei die Basiswand (14) ein Loch (22) enthält, die Platte (164) einen Hauptteil gleicher Form wie die des Lochs (22) enthält, vervollständigt durch eine Falzung (170), die parallel zum Hauptteil ist und sich in das Loch (122) einfügen kann, und durch mindestens zwei Haken (172), die den Halt der Tafel (160) gegen die Basiswand (14) ermöglichen.

12. Gerät nach einem der Ansprüche 1 bis 11, wobei das Haltesystem der Batterie eine Trägerplatte (140) parallel zur Basiswand (14) enthält.

13. Gerät nach einem der Ansprüche 1 bis 12, das Schienen (44) enthält, die mit Führungseinrichtungen (46') des Einschubs (100) und parallelen Führungseinrichtungen (46) für die Trennplatte (7) versehen sind.

14. Gerät nach einem der Ansprüche 1 bis 13, wobei die Hülle (2) von Falzblechen geformt wird.

## Claims

1. Electrical apparatus, such as a remote control interface cabinet for high-voltage switches (ITI), comprising a rectangular parallelepipedal enclosure (2) delimited by two opposing lateral walls (32, 38), a back wall (12), two opposing base (14) and top (36) walls, and a door (3) pivotingly coupled to a lateral wall (32) along a larger dimension edge of the parallelepiped, said apparatus comprising, inside the enclosure (2):
- a separation plate (7) parallel to the base and top walls (14, 36);
- guiding means (46'), parallel to the separation plate (7), on the lateral walls (32, 38);
- a drawer (100) formed by two lateral flanks (102, 104) parallel to the lateral walls (32, 38) of the enclosure (2), two top and bottom faces (110, 112) parallel to one another and to the separation plate (7), the top face (110) being located between the bottom face (112) and the separation wall (7), the lateral flanks (102, 104) comprising, level with the top face (110), runners (106) that can slide in the guiding means (46') and, level with the bottom face (112), means for removable securing (108) with the lateral walls (32, 38) of the enclosure (2);
such that the enclosure (2) delimits three compartments (4, 5, 6) separated by the separation plate (7) and the bottom face (112) of the drawer (100);
- an electronic monitoring and control system comprising at least one power supply board (76), a central data acquisition and processing unit (84) consisting of electronic circuit boards, a human-machine interface (82) and a communication block (70) consisting of electronic circuit boards, said electronic monitoring and control system being located in the drawer (100);
- a system (140) for holding a battery at the level of the base wall (14).

2. Apparatus according to Claim 1, in which the electronic system comprises a backplane board (98) forming a fifth face of the drawer (100) and parallel to the back wall of the enclosure (2), the other boards of said system being connected thereto.

3. Apparatus according to one of Claims 1 or 2, in which the power supply board (76) of the monitoring and control system is parallel to a lateral flank (104) of the drawer (100), said flank (104) comprising a cutout (116) for cooling the power supply board (76).

4. Apparatus according to one of Claims 1 to 3, in which the bottom face (112) of the drawer (100) comprises cable entry orifices (122, 124).

5. Apparatus according to one of Claims 1 to 4 in which the lateral flanks (102, 104) and the top and bottom faces (110, 112) of the drawer (100) are folded metal plates, the runners (106) are formed by folds of the metal plate of the walls (102, 104) and the removable securing means (108) are hook-shaped cutouts cooperating with protuberances (68) from the lateral walls (32, 38) of the enclosure (2).

6. Apparatus according to one of Claims 1 to 5, in which the door (3) comprises an orifice provided with transparent blocking means (56) making it possible to at least partly view the interior of the drawer (100).

7. Apparatus according to Claim 6, in which the transparent blocking means (56) are slidingly mounted along the door (3), a latch (58) allowing access to the interior of the drawer (100).

8. Apparatus according to one of Claims 6 or 7, in which the door (3) is provided with locking means arranged to allow three degrees of security, namely a sealed enclosure (2) without access to the compartments (4, 5, 6), access only to a part of the drawer (100) and access to all of the compartments (4, 5, 6).

9. Apparatus according to one of Claims 1 to 8, further comprising a connection panel (160) provided with connection supports (162) which can be removably secured to the base wall (14) of the enclosure (2).

10. Apparatus according to Claim 9, in which the panel (160) comprises a plate (164) provided with voids (166), at least one void being associated with a connection support (162), the plate (164) being mounted parallel to the base wall (14).

11. Apparatus according to Claim 10, in which the base wall (14) comprises a hole (22), the plate (164) comprises a main part of form identical to that of the hole (22) complemented by a fold (170) parallel to the main part and that can be inserted into the hole (122), and by at least two hooks (172) making it possible to hold the panel (160) against the base wall (14).

12. Apparatus according to one of Claims 1 to 11, in which the system for holding the battery comprises a support plate (140) parallel to the base wall (14).

13. Apparatus according to one of Claims 1 to 12, comprising rails (44) provided with guiding means (46') for the drawer (100) and parallel guiding means (46) for the separation plate (7).

14. Apparatus according to one of Claims 1 to 13, in which the enclosure (2) is formed by folded metal plates.
